# EUROPÄISCHE PATENTSCHRIFT

(11) **EP 1 793 113 B1**
(45) Veröffentlichungstag und Bekanntmachung des Hinweises auf die Patenterteilung: **03.03.2010**
(21) Anmeldenummer: 06024974.5
(22) Anmeldetag: 02.12.2006
(51) Int. Cl.: F02M 25/07

(54) **Doppelventil für eine Einrichtung zur Abgasrückführung**
Dual valve for exhaust gas recirculation device
Vanne double pour dispositif de recyclage des gaz d'échappement

(30) Priorität: 02.12.2005 DE 102005058494; 13.11.2006 DE 102006053755
(43) Veröffentlichungstag der Anmeldung: 06.06.2007
(73) Patentinhaber: Behr Thermot-tronik GmbH, 70806 Kornwestheim (DE)
(72) Erfinder: Kunz, Torsten-André, 74177 Bad Friedrichshall (DE)
(74) Vertreter: Patentanwälte Ruff, Wilhelm, Beier, Dauster & Partner

(56) Entgegenhaltungen:
- EP-A- 0 994 247
- EP-A- 1 362 985
- WO-A-01/83975
- DE-A1- 10 025 877

## Beschreibung

Die Erfindung betrifft ein Doppelventil für eine Einrichtung zur Abgasrückführung, das zwei mit einem gemeinsamen Antrieb gegensinnig antreibbare Ventilelemente enthält, von welchen eines einem Strömungsweg mit einem Abgaskühler und das andere einem Strömungsweg ohne Abgaskühler zugeordnet ist und von welchen abhängig von der Antriebsrichtung nur jeweils eines aus seiner Schließstellung heraus bewegbar ist.

Bei einem bekannten Doppelventil der eingangs genannten Art (EP 0 994 247 B1) sind die beiden Ventilelemente auf einer gemeinsamen Betätigungsstange angeordnet, die quer zu den beiden Strömungswegen verläuft. Zwischen den beiden Strömungswegen ist ein dritter Strömungsweg vorgesehen, der durch die beiden Ventilelemente gegenüber den beiden Strömungswegen absperrbar ist und der zu einer Lufteinlassleitung führt. Die Ventilelemente sind so auf der Betätigungsstange angeordnet, dass jeweils eines von der Betätigungsstange aus der Schließstellung heraus bewegbar ist, während das andere in der Schließstellung verbleibt. Bei dieser Bauart durchdringt die axial verschiebbare Betätigungsstange eine Seitenwand eines Strömungsweges sowie beide Ventilelemente. Es müssen deshalb drei Dichtungen vorgesehen werden, die ein axiales Verschieben der Betätigungsstange gestatten, jedoch möglichst kein Abgas hindurch lassen.

Weitere gattungsgemäße Doppelventile können den DE 100 25 877 A1 und der EP 1 362 985 A2 entnommen werden.

Der Erfindung liegt die Aufgabe zugrunde, ein Doppelventil der eingangs genannten Art zu schaffen, das eine verbesserte Abdichtung erlaubt.

Diese Aufgabe wird dadurch gelöst, dass der Antrieb eine zu Drehungen antreibbare Gewindestange enthält, auf der ein mit einem Gewinde versehenes Mitnahmeelement angeordnet ist, das jeweils zur Gewindestange parallele Mitnehmerstangen aufweist, die mit jeweils einem Mitnehmeranschlag versehen sind, der in Öffnungsrichtung des zugehörigen Ventilelementes an einem Gegenanschlag dieses Ventilelementes anliegt, das mittels Federkraft in seiner Schließstellung gehalten ist.

Die zu Drehungen antreibbare Gewindestange ist nicht axial verschiebbar, so dass eine Dichtung eingesetzt werden kann, die keine Axialbewegungen, sondern nur Drehbewegungen zulässt. Da für jedes Ventilelement eine eigene Mitnehmerstange vorgesehen ist, können die Ventilelemente unabhängig voneinander gestaltet werden.

In Ausgestaltung der Erfindung wird vorgesehen, dass die Ventilelemente derart an den Mitnehmerstangen angebracht sind, dass sich die Mitnehmerstangen in Richtung der Schließbewegung relativ zu den Ventilelementen weiterbewegen, nachdem die Ventilelemente ihre Schließstellung erreicht haben. Die Ventilelemente werden dann mittels Federkraft in ihrer Schließstellung gehalten. Dabei wird zweckmäßig vorgesehen, dass die Ventilelemente jeweils in Schließrichtung mittels einer Druckfeder gegen den zugehörigen Mitnehmeranschlag der Mitnehmerstangen abgestützt sind. Die Druckfedern liegen somit nur an den Ventilelementen und dem Mitnehmeranschlag der Mitnahmestangen an, so dass das Gehäuse, in welchem die Ventilelemente und die Mitnehmerstangen angeordnet sind, völlig frei gestaltet werden kann.

In weiterer Ausgestaltung der Erfindung wird vorgesehen, dass die Ventilelemente als geschlossene Tellerventilelemente gestaltet sind, die jeweils mit einer kegelstumpfförmigen Ventilfläche an einem kegelstumpfförmigen Ventilsitz angeordnet sind.

In weiterer Ausgestaltung der Erfindung wird vorgesehen, dass die Ventilelemente auf der den Mitnehmerstangen zugewandten Seite mit einem Ansatz versehen sind, der eine Aufnahme für einen Mitnehmeranschlag und für eine an dem Mitnehmeranschlag abgestützte Druckfeder bildet. Diese Ventilelemente weisen keine Durchbrüche auf, die eine Abdichtung erfordern. Die einzige Abdichtung nach außen ist somit die Abdichtung für die Gewindestange.

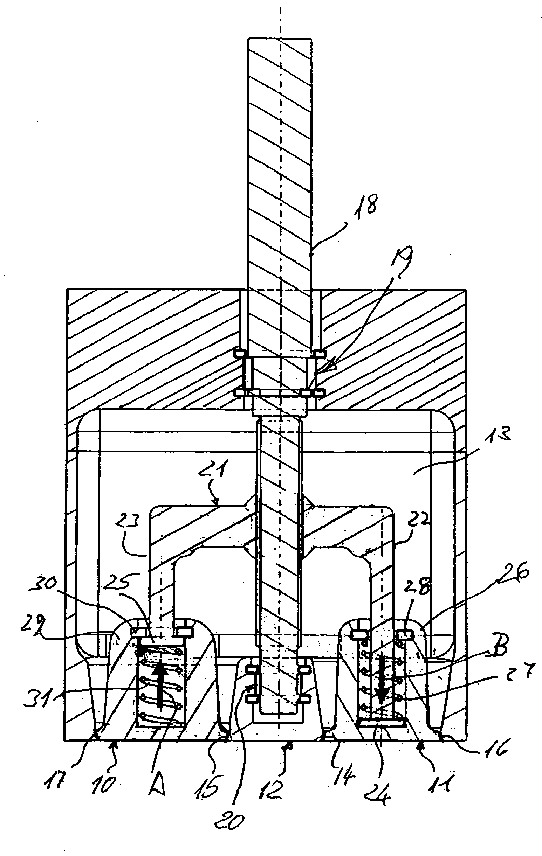

Weitere Merkmale und Vorteile der Erfindung ergeben sich aus der nachfolgenden Beschreibung der in der Zeichnung dargestellten Ausführungsform.

Die Zeichnung zeigt einen axialen Schnitt durch ein erfindungsgemäßes Doppelventil.

In ähnlicher Weise wie bei der Bauart nach der EP 0 994 247 B1 sind zwischen einer Abgasleitung eines Verbrennungsmotors und einer Zuluftleitung zu dem Verbrennungsmotor zwei Strömungswege vorgesehen, über die Abgas von der Abgasleitung zu der Zuluftleitung zurückgeführt werden kann. Einer der Strömungswege enthält einen Abgaskühler, während der andere das Abgas direkt und ungekühlt zu der Zuluftleitung führt. Das in der Zeichnung dargestellte Doppelventil hat die Funktion, entweder beide Strömungswege abzusperren oder - entsprechend den Betriebsbedingungen - einen der beiden Strömungswege freizugeben, um entweder gekühltes Abgas oder ungekühltes Abgas der Zuluft zu dem Verbrennungsmotor zuzugeben. Jedes der Ventilelemente 10, 11 des Doppelventils soll dabei zwischen seiner Schließstellung und seiner voll geöffneten Stellung verstellbar sein, ohne dass das jeweils andere Ventilelement aus seiner Schließstellung herausbewegt wird.

Das Ventilelement 10 ist beispielsweise in einem Strömungsweg angeordnet, der einen Abgaskühler enthält. Das Ventilelement 11 ist dann in einem Strömungsweg angeordnet, der ungekühltes Abgas von der Abgasleitung zu einer Zuluftleitung führt. Die entsprechenden Strömungswege sind in nicht näher dargestellter Weise an ein Ventilgehäuse 12 angeschlossen. Aus einer Kammer 13 des Ventilgehäuses 12 strömt Abgas in einen Kühler oder einen Bypass und dann zu einer Zugluftleitung. Die Ventilelemente 10, 11 geben in ihrer geöffneten Stellung jeweils den Strömungsweg aus der Kammer 13 frei, die in nicht näher dargestellter Weise mit einer Eintrittsöffnung versehen ist.

Das Ventilelement 10, das in seiner Schließstellung dargestellt ist, öffnet in Richtung des Pfeiles A, der in das Innere der Kammer 13 gerichtet ist. Das Ventilelement 11 öffnet in Richtung des Pfeiles B, der aus der Kammer 13 hinaus gerichtet ist. Beide Ventilelemente 10, 11 sind als Tellerventilelemente ausgebildet. Sie besitzen eine ringförmige, kegelstumpfförmige Dichtfläche 14, 15, der jeweils ein entsprechend kegelstumpfförmiger Ventilsitz 16, 17 zugeordnet ist.

Die beiden Ventilelemente 10, 11 werden mittels eines gemeinsamen Antriebs aus der dargestellten Schließstellung in ihre jeweilige Öffnungsstellung gebracht. Der gemeinsame Antrieb enthält eine Gewindestange 18, die nur in dem Bereich der Kammer 13 mit einem Außengewinde versehen ist und die in dem Gehäuse 12 mittels Wälzlagern 19, 20 gelagert und mittels Dichtungselementen abgedichtet ist. Auf der Gewindestange 18 ist ein mit einem Gewinde versehenes Mitnehmerelement 21 angeordnet. Dieses Mitnehmerelement 21 hat zwei zu der Gewindestange 18 parallel verlaufende Mitnehmerstangen 22, 23. Diese Mitnehmerstangen 22, 23 sind an ihren Enden mit Mitnehmeranschlägen 24, 25 versehen.

Das Ventilelement 11 besitzt einen in die Kammer 13 hineinragenden Ansatz 26, der mit einer Bohrung versehen ist, in welches die Mitnehmerstange 22 eindringt. Der Mitnehmeranschlag 24 der Mitnehmerstange 22 liegt in der dargestellten Schließstellung an dem Boden der Bohrung an. Auf dem Mitnehmeranschlag 24 stützt sich eine Druckfeder 27 ab, deren anderes Ende gegen einen in die Bohrung des Ansatzes 26 eingesetzten Abstützring 28 abgestützt ist.

Das Ventilelement 10 ist ebenfalls mit einem nach innen in die Kammer 13 des Gehäuses ragenden Ansatz 29 versehen. Der Ansatz 29 weist eine Bohrung auf, in die die Mitnehmerstange 23 mit ihrem Mitnehmeranschlag 25 hinein ragt. Der Mitnehmeranschlag 25 liegt einem als Gegenanschlag dienenden Abstützring 30 gegenüber, der in die Bohrung eingesetzt ist. Zwischen dem Mitnehmeranschlag 25 und dem Boden der Bohrung ist eine Druckfeder 31 angeordnet.

Wenn die Gewindestange 18 mittels eines nicht dargestellten Drehantriebs verdreht wird, beispielsweise mittels eines Servomotors oder eines Schrittmotors, so wird das Mitnehmerelement 21 entsprechend der Drehrichtung in axialer Richtung zu der Gewindestange 18 verschoben. Erfolgt das axiale Verschieben des Mitnehmerelementes 21 in Richtung des Pfeiles A, so nimmt der Mitnehmeranschlag 25 der Mitnehmerstange 23 das Ventilelement 10 mit und öffnet den Strömungsweg, der mit dem Abgaskühler versehen ist. Das Ventilelement 11 liegt mit seiner Ventilfläche 14 an dem Ventilsitz 16 an und bleibt deshalb in der Schließstellung. Der Mitnehmeranschlag 24 drückt bei dieser Bewegung die Druckfeder 27 zusammen, so dass der Schließdruck des Ventilelementes 11 erhöht wird.

Wird die Gewindestangen 18 dann in Gegenrichtung gedreht, so bewegt sich das Mitnehmerelement 21 entsprechend in entgegengesetzter Richtung. Die Mitnehmerstange 23 nimmt über den Mitnehmeranschlag 25 und die Druckfeder 31 das Ventilelement 10 mit, bis dies seine dargestellte Schließstellung erreicht. Bei einer weiteren Bewegung des Mitnehmerelementes 21 in dieser Richtung wird die Druckfeder 31 zusammengedrückt, so dass der Schließdruck zwischen der Ventilfläche 15 und dem Ventilsitz 17 erhöht wird. Sobald der Mitnehmeranschlag 24 den Boden der Bohrung des Ansatzes 26 des Ventilelementes 11 erreicht hat, wird bei einer weiteren Bewegung in gleicher Richtung das Ventilelement 11 mitgenommen, so dass seine Ventilfläche 14 sich von dem Ventilsitz 16 löst.

Das Ventilelement 11 ist in der Schließstellung durch den Druck des Abgases belastet. Die Druckfeder 27 ist deshalb so zu bemessen, dass sie das Ventilelement 11 in der dargestellten Stellung gegen den Abgasdruck sicher geschlossen hält.

Die Erfindung bietet den Vorteil, dass die von den Ventilelementen 10 und 11 gesteuerten Ventile genau, unabhängig voneinander stufenlos mit nur einem Aktuator angesteuert werden können. Außerdem ist nach außen nur eine Wellendichtung notwendig, während die Verbindung zu den Ventilelementen 10, 11 keine Dichtung erfordert. Darüber hinaus ist das Ventil in der Null-Lage sicher geschlossen, da beide Ventilelemente mittels Federkraft in die Schließ-Stellung gedrückt werden.

Bei einer abgewandelten Ausführungsform werden Ventilelemente in Form von Kolbenschiebern vorgesehen.

Bei einer weiteren abgewandelten Ausführungsform ist die Gewindestange 18 außerhalb der Kammer 13 angeordnet. In diesem Fall befindet sich auch der Teil des Mitnehmerelementes, der mit dem Innengewinde versehen ist, außerhalb der Kammer 13. In die Kammer 13 dringen dann nur die Mitnehmerstangen 22, 23 ein, die mit Dichtungselementen versehen sind.

## Patentansprüche

1. Doppelventil für eine Einrichtung zur Abgasrückführung, das zwei mit einem gemeinsamen Antrieb gegensinnig antreibbare Ventilelemente (10,11) enthält, von welchen eines einem Strömungsweg mit einem Abgaskühler und das andere einem Strömungsweg ohne Abgaskühler zugeordnet ist und von welchen abhängig von der Antriebsrichtung nur jeweils eines aus seiner Schließstellung heraus bewegbar ist, **dadurch gekennzeichnet, dass** der Antrieb eine zur Drehung antreibbare Gewindestange (18) enthält, auf der ein mit einem Gewinde versehenes Mitnehmerelement (21) angeordnet ist, das zwei zur Gewindestange (18) parallele Mitnehmerstangen (22, 23) aufweist, die mit jeweils einem Mitnehmeranschlag (24, 25) versehen sind, der in Öffnungsrichtung des zugehörigen Ventilelementes (10, 11) an einem Gegenanschlag dieses Ventilelementes (10,11) anliegt, das mittels Federkraft in seiner Schließstellung gehalten ist.

2. Doppelventil nach Anspruch 1, **dadurch gekennzeichnet, dass** die Ventilelemente (10, 11) derart an den Mitnehmerstangen (22, 23) angeordnet sind, dass sich die Mitnehmerstangen (22,23) in Richtung der Schließbewegung relativ zu den Ventilelementen (10,11) weiterbewegen, nachdem die Ventilelemente (10,11) ihre Schließstellung erreicht haben.

3. Doppelventil nach Anspruch 1 oder 2, **dadurch gekennzeichnet, dass** die Ventilelemente (10, 11) jeweils in Schließrichtung mittels einer Druckfeder (27, 31) gegen den zugehörigen Mitnehmeranschlag (24, 25) der Mitnehmerstangen (22, 23) abgestützt sind.

4. Doppelventil nach einem der Ansprüche 1 bis 3, **dadurch gekennzeichnet, dass** die Ventilelemente (10, 11) als geschlossene Tellerventilelemente gestaltet sind, die jeweils mit einer kegelstumpfförmigen Ventilfläche (14, 15) einem kegelstumpfförmigen Ventilsitz (16, 17) zugeordnet sind.

5. Doppelventil nach einem der Ansprüche 1 bis 4, **dadurch gekennzeichnet, dass** die Ventilelemente (10, 11) auf der den Mitnehmerstangen (22, 23) zugewandten Seite mit einem Ansatz (26, 29) versehen sind, der eine Aufnahme für einen Mitnehmeranschlag . (24, 25) und für eine an dem Mitnehmeranschlag (24, 25) abgestützte Druckfeder (27, 31) bildet.

## Claims

1. Dual valve for a device for exhaust gas recirculation containing two valve elements (10, 11) drivable in opposing directions using a common drive unit, one of said valve elements being assigned to a flow path with an exhaust gas cooler and the other to a flow path without exhaust gas cooler and of which valve elements only one is movable out of its closing position, depending on the drive direction, **characterized in that** the drive unit contains a threaded rod (18) drivable for rotation, on which threaded rod a driver element (21) provided with a thread is arranged that has two driver rods (22, 23) parallel to the threaded rod (18) which are each provided with a driver stop (24, 25) and each make contact in the opening direction of the associated valve element (10, 11) with a counter-stop of said valve element (10, 11), which is held by spring force in its closing position.

2. Dual valve according to Claim 1, **characterized in that** the valve elements (10, 11) are arranged on the driver rods (22, 23) such that said driver rods (22, 23) continue to move in the direction of the closing movement relative to the valve elements (10, 11) after said valve elements (10, 11) have reached their closing position.

3. Dual valve according to Claim 1 or 2, **characterized in that** the valve elements (10, 11) are each pressed in the closing direction against the associated driver stop (24, 25) of the driver rods (22, 23) by means of a compression spring (27, 31).

4. Dual valve according to one of Claims 1 to 3, **characterized in that** the valve elements (10, 11) are designed as closed disk valve elements each assigned with a frustum-shaped valve face (14, 15) to a frustum-shaped valve seat (16, 17).

5. Dual valve according to one of Claims 1 to 4, **characterized in that** the valve elements (10, 11) are provided on the side facing the driver rods (22, 23) with a shoulder (26, 29) forming a receptacle for a driver stop (24, 25) and for a compression spring (27, 31) pressing against the driver stop (24, 25).

## Revendications

1. Vanne double pour un dispositif de recyclage des gaz d'échappement comprenant deux éléments de vanne (10, 11) entraînables en sens contraires avec un dispositif d'entraînement commun, parmi lesquels un est prévu pour un chemin d'écoulement avec un refroidisseur de gaz d'échappement et l'autre pour un chemin d'écoulement sans refroidisseur de gaz d'échappement, et parmi lesquels un seul peut, en fonction du sens de fonctionnement, être mis en mouvement à partir de sa position fermée, **caractérisée en ce que** le dispositif d'entraînement comprend une tige filetée (18) pouvant être entraînée pour la rotation, sur laquelle est disposé un élément d'entraînement (21) pourvu d'un filet, lequel élément présente deux tiges d'entraînement (22, 23) parallèles à la tige filetée (18), lesquelles sont pourvues de respectivement une butée d'entraînement (24, 25) qui s'appuie dans le sens d'ouverture de l'élément de vanne correspondant (10, 11) sur une contre-butée de cet élément de vanne (10, 11) qui est maintenu dans sa position fermée par force élastique.

2. Vanne double selon la revendication 1, **caractérisée en ce que** les éléments de vanne (10, 11) sont disposés de telle manière sur les tiges d'entraînement (22, 23) que les tiges d'entraînement (22, 23) continuent à se déplacer dans le sens du mouvement de fermeture par rapport aux éléments de vanne (10, 11) une fois que les éléments de vanne (10, 11) ont atteint leur position fermée.

3. Vanne double selon la revendication 1 ou 2, **caractérisée en ce que** les éléments de vanne (10, 11) sont appuyés dans le sens de fermeture respectif contre la butée d'entraînement (24, 25) correspondante des tiges d'entraînement (22, 23) au moyen d'un ressort de pression (27, 31).

4. Vanne double selon l'une des revendications 1 à 3, **caractérisée en ce que** les éléments de vanne (10, 11) sont conçus sous forme d'éléments de vanne à disque fermés qui sont affectés à un siège de vanne (16, 17) en forme de cône tronqué par respectivement une surface de vanne (14, 15) en forme de cône tronqué.

5. Vanne double selon l'une des revendications 1 à 4, **caractérisée en ce que** les éléments de vanne (10, 11) sont pourvus, sur le côté tourné vers les tiges d'entraînement (22, 23), d'une saillie (26, 29) qui forme un logement pour une butée d'entraînement (24, 25) et pour un ressort de pression (27, 31) appuyé sur la butée d'entraînement (24, 25).
